# EUROPEAN PATENT APPLICATION

(11) **EP 1 674 742 A2**
(43) Date of publication of application: **28.06.2006**
(21) Application number: 05380216.1
(22) Date of filing: 07.10.2005
(51) Int. Cl.: F16B 41/00

(54) **Safety device for screws**

(30) Priority: 22.12.2004 ES 200402887 U
(71) Applicant: Juguetes Pico, S.A., 03440 Ibi (Alicante) (ES)
(72) Inventor: Bernabeu Gisbert, Francisco Antonio, 03440 IBI (Alicante) (ES)
(74) Representative: Ungria Lopez, Javier

(57) **Abstract**

It has a polygonal headed screw (2) whose head is housed in an axial projection (9) of an inside body (1) through a hole (8) and in such a way that this projection (9) facilitates the guided movement of the cited head inside thereof. Besides, there is an outside body (3) or crown that is placed surrounding the inside body (2) with axial and perimetric retaining means and in the bottom of the outside body (3), there are some grooves (5) capable of receiving and retaining in rotation and by pressure some lockable tongues (4) belonging to the inside body (1).

## Description

### OBJECT OF THE INVENTION

As expressed in the title of this specification, the present invention refers to a safety device for screws whose essential purpose consists of providing a simple attachment to screws, in such a way that in the first insertion of the screw, the screw can locate itself in the corresponding part up to a certain point, whereas in the unscrewing the screw can be loosened but it cannot be taken out completely from the grasped part.

### BACKGROUND OF THE INVENTION

Different safety mechanisms for screws, which prevent the users from fiddling around, are known. Hence, for example, safety devices that do no more than prevent the part being fiddled around with from being freely turned are known. Hence, a child or any user who is not familiar with the system could not unscrew the screw by turning it correspondingly.

The safety devices for screws that are known to us have drawbacks such as that the limitation or safety only refers to one direction of threading, or that the complexity thereof makes them unfeasible for simple and low costs uses.

### DESCRIPTION OF THE INVENTION

In order to achieve the objectives and avoid the drawbacks indicated above, the invention consists of a safety device for screws that has different parts, in such a way that in the corresponding fiddling with the screw, a moment is reached when the part being fiddled with is not accessible to the user.

In a novel manner, according to the invention, the device has a polygonal headed screw, whose head is housed in an axial projection of an inside body through a hole and in such a way that this projection facilitates guided movement of the cited head inside it. Besides, the device has a device with an outside body or crown that is placed surrounding the inside body with axial and perimetric retaining means. In the bottom of the outside body there are also some grooves capable of receiving and retaining in rotation and by pressure some lockable tongues belonging to the inside body, in such a way that with the three cited parts assembled and exerting pressure and rotation, the screwing of the shank of the screw on the corresponding part until a limit is reached, is carried out; whereas when unscrewing takes place, exerting pressure and rotation, the shank of said part is released until another limit is reached that prevents total removal of said part.

In the preferred embodiment of the invention, the cited axial and perimetric retaining means consist of an outside perimetric projection of the outermost wall of the inside body, as well as an inside perimetric projection of the side wall of the outside body, in such a way that after these bodies couple together by elastic connection, it is impossible to separate these bodies.

In this embodiment, the outermost wall of the inside body and the side wall of the outside body are provided with a slight tapering.

Furthermore, in the preferred embodiment of the invention, the outside surface of the side wall of the outside body has some notches or knurling that facilitates the handling thereof.

In the preferred embodiment of the invention, the grooves of the outside body are arranged in a number of four and with an angular equal separation therebetween; whereas the lockable tongues of the inside body are also arranged in a number of four and with an angular equal separation therebetween.

In the embodiment, which we have referred to, the cited polygonal head is hexagonal.

Finally, in the preferred embodiment of the invention, the cited bottom of the outside body includes peripherally to its grooves some unscrewing projections; whereas the inside body has some unscrewing recesses arranged peripherally with respect to the cited tongues and corresponding to the receiving of the cited unscrewing projections.

With this shape and structure, the device of the invention, has the advantages that permits screwing on, with all the components assembled, on a useable part without at the end thereof the limit is reached, since the inside body and the outside body slip when not enough axial pressure is applied between them. Besides, the screw can be unscrewed from the corresponding part only to a certain degree in virtue of the structure described and of the corresponding slipping. Hence, a very simple safety device that is applicable to low cost objects is provided. At the same time, excellent quality safety is provided so that users, such as children for example who are playing with their toys, cannot hurt themselves or break the object wherein the screw is used.

In order to provide a better understanding of this specification and forming an integral part thereof, some figures wherein the object of the invention has been represented in an illustrative and non-restrictive manner are accompanied.

### BRIEF DESCRIPTION OF THE FIGURES

Figure 1 represents a perspective exploded view of a safety device for screws made in accordance with the present invention.
Figure 2 represents profile, diametric section and plan views of the top part of preceding figure 1.
Figure 3 represents profile, diametric section and plan views of the bottom part of preceding figure 1.
Figure 4 represents three screwing on stages in the useable object of the device to which reference was made in the preceding figure 1, wherein all the components thereof are assembled.
Figure 5 is a figure similar to the one of the preceding figure 4 but wherein the three stages correspond to the unscrewing of the device.

### DESCRIPTION OF A PREFERRED EMBODIMENT OF THE INVENTION

A description of an embodiment of the invention is made hereinafter, making reference to the numbers used in the figures.

Hence, the safety device for screws of this embodiment has three parts consisting of an inside body (1), a polygonal headed screw (2) and an outside body (3).

The screw (2) has a threaded shank integral to a head, which is hexagonal in the present embodiment.

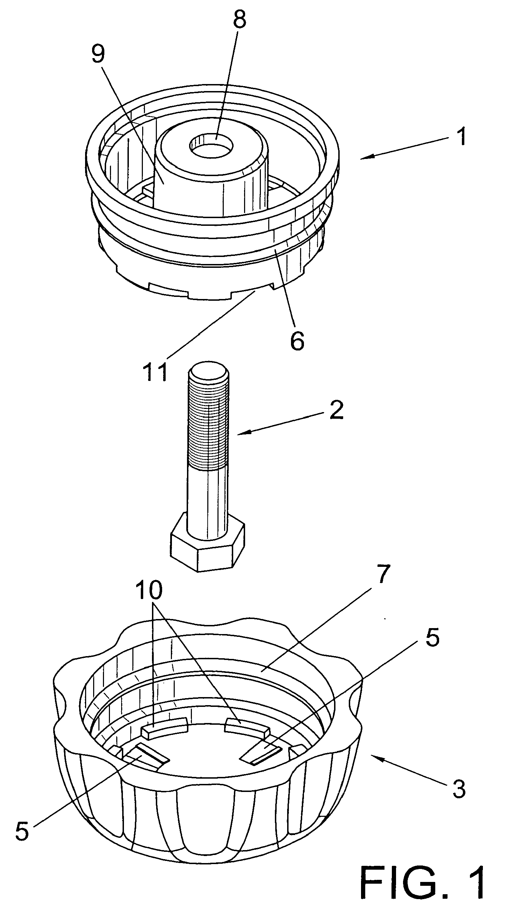

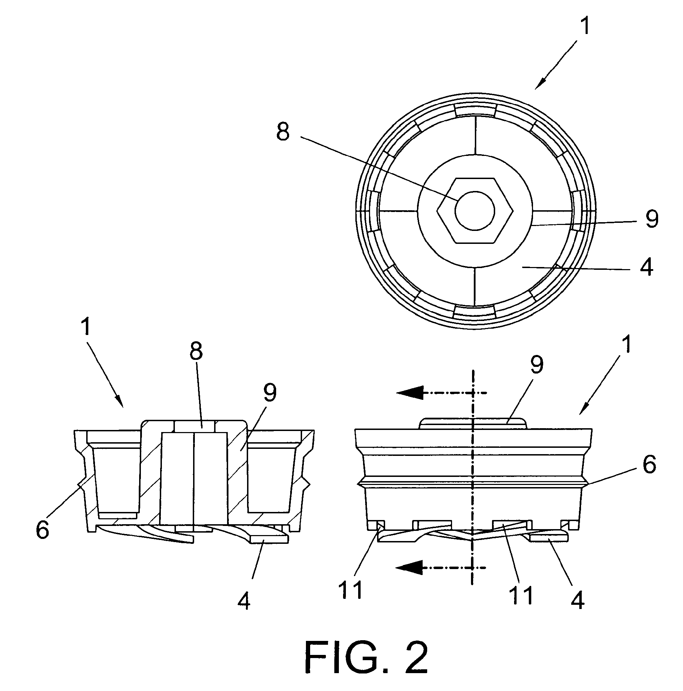

The inside body (1), just as it can be seen in figures 1 and 2, is a type of bushing with an axial projection (9) provided with a center hole (8) and a hexagonal section cavity congruent with the head of the screw (2).

Surrounding this axial projection (9), the inside body (1) has a circumferential wall provided with a certain tapering that also includes an outside perimetric projection (6).

Opposite the hole (8), the inside body (1) has some lockable tongues (4), which in this embodiment are arranged in a number of four and with an angular equal separation therebetween. On the other hand, with a radial equal separation and arranged peripherally to the tongues (4), the inside body (1) has some unscrewing recesses (11).

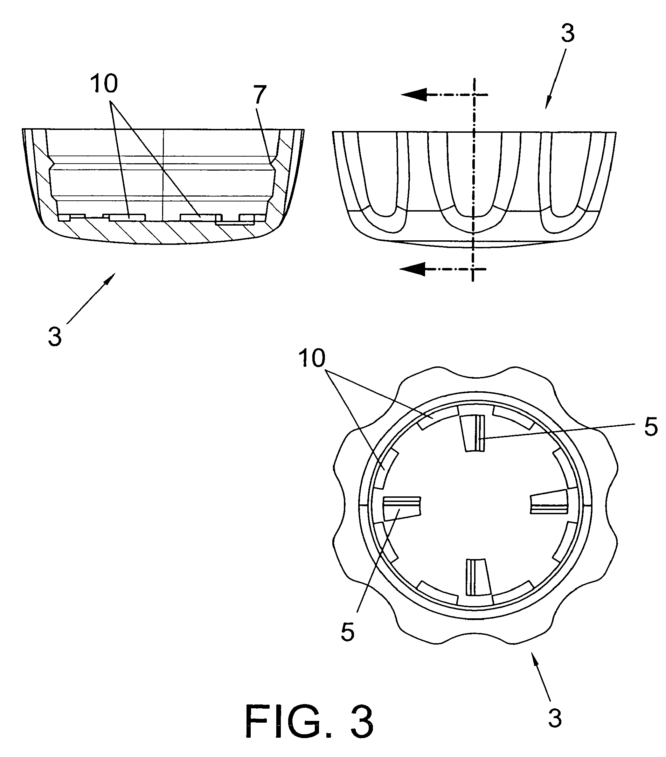

The outside body (3) is a type of crown with notches or outside knurling, as one can see in figures 1 and 3.

The inside wall of this outside body (3) has a certain tapering and includes an inside perimetric projection (7). Besides, the bottom of this crown or outside body (3) has some grooves (5) that in the present embodiment are arranged in a number of four and with an angular equal separation therebetween. Besides, with radial equal separation and peripheral arrangement with respect to the recesses (5), this bottom of the outside body (3) has some unscrewing projections (10) that are complementary to the above-cited recesses (11).

In the assembly of these three components (1), (2) and (3), the screw (2) is inserted through the hole (8), in such a way that its head is housed in the axial projection (9); whereas the outside body (3) is coupled to the preceding assembly by pressure by means of elastic connection, until the inside perimetric projection (7) exceeds the outside perimetric projection (6), whereby the three parts are assembled and arranged for use in the corresponding object.

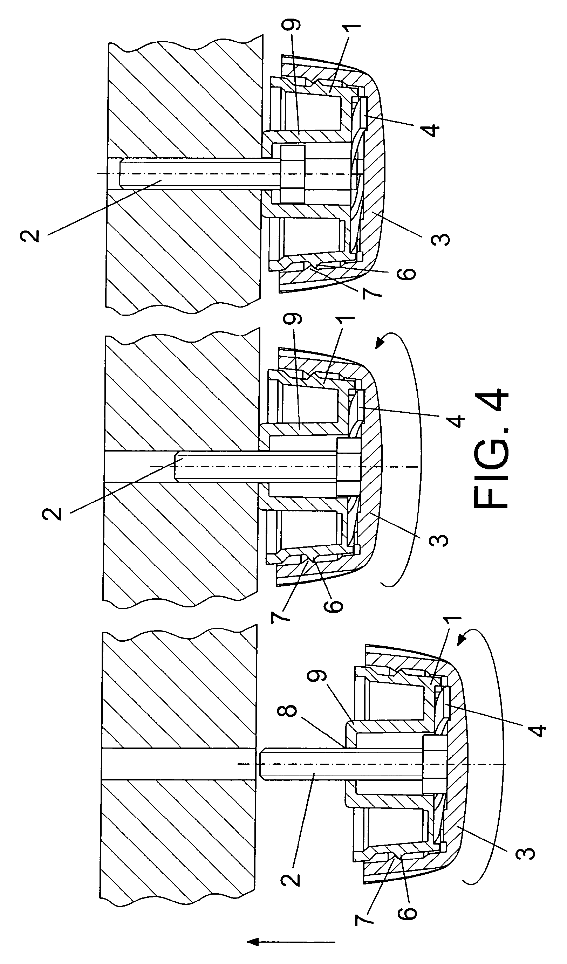

In the first screwing on of the device, just as it is shown in figure 4, the head of the screw (2) presses on the center of the bottom of the outside body (3), whereas the tongues (4) are locked in the grooves (5) . Hence, the screwing onto the useable object is carried out, in such a way that the shank of the screw (2) penetrates into the useable part or object and the head of the screw (2) approaches the hole (8). When the head of the screw (2) reaches the limit defined by the bottom of the axial projection (9), the screwing on ends. The outside body (3) and the inside body (1) could slip, depending on the shape of the grooves (5), if one insists on rotating clockwise and does not exert enough pressure between the bodies (1) and (3). The device is assembled on the corresponding object, just as one can see in figure 4.

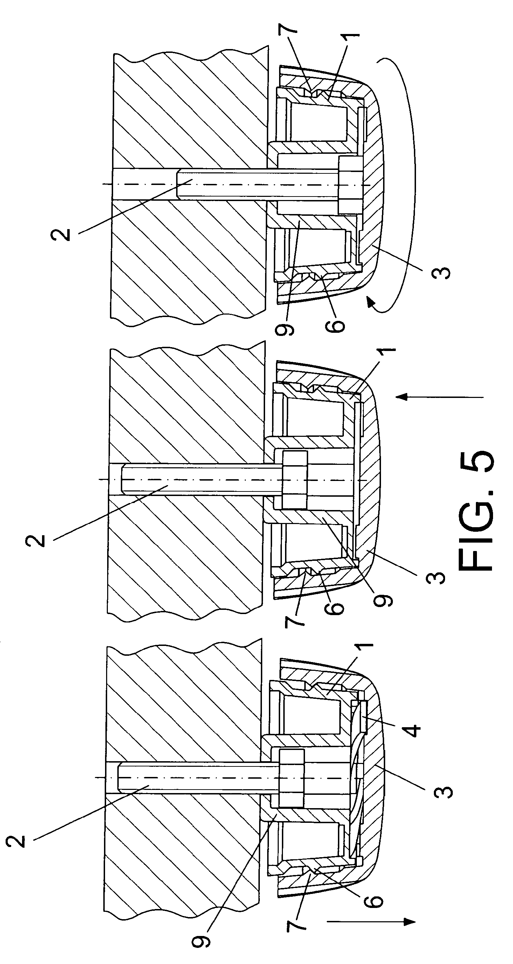

On the other hand, if one wishes to unscrew the device just as it is shown in figure 5, first of all bodies (1) and (3) will have to be pressed on, overcoming the force which like a spring the tongues (4) exert and to rotate maintaining the pressure, until the projections (10) and the recesses (11) fit together. Counterclockwise, the unscrewing will take place, whereby the cavity of the axial projection (9) will guide the head of the screw (2) until it makes contact with the bottom of the outside body (3), where it is no longer possible to unscrew it, just as it is shown in figure 5.

In this embodiment, the head of the screw (2) is hexagonal, but in other screws the heads could be quadrangular, triangular, pentagonal or the like.

Besides, in the present embodiment the tongues (4) and the grooves (5) are arranged in a number of four, but there can also be a smaller or larger number thereof.

In this embodiment, during the unscrewing of the screw no slipping takes place. Slipping is caused when the bodies (3) and (1) rotate with one body pressing against the other. This achieves that the screw cannot unscrew easily, for example, when fiddled with by a child. The function of the lockable tongues (4) is two-fold, first of all, the inside body (1) is always kept separated from the outside body (3), as long as no pressure is put thereon in order to unscrew it as if it were a spring; and secondly, it facilitates screwing on and abutting against the corresponding grooves (5). Unscrewing takes place thanks to the unscrewing projections (10) of the inside of the outside body (3) that fit in the recesses (11) or the corresponding female parts of the inside body (1), when the body (3) presses on the body (1) so that the spring effect created by the tongues (4) is overcome, making it possible to unscrew the screw.

## Claims

1. Safety device for screws, that has different parts, in such a way that in the corresponding actuation a moment is reached wherein the handling part accessible to the user reaches a limit, **characterized in that** it has a polygonal headed (2) screw whose head is housed in an axial projection (9) of an inside body (1) through a hole (8) and in such a way that this projection (9) facilitates the guided movement of the cited head through the inside thereof; there also being an outside body (3) or a crown that is arranged surrounding the inside body (2) with axial and perimetric retaining means; and there being in the bottom of the outside body (3) some grooves (5) capable of receiving and retaining in rotation and by some lockable tongues (4) belonging to the inside body (1); in such a way that with the three cited parts (1, 2, 3) assembled and exerting pressure and rotation the screwing of the shank of the screw (2) on the corresponding part until it reaches a limit, is carried out; whereas in the unscrewing, exerting pressure and rotation, the shank of said part is released until another limit is reached which prevents the total removal of the cited part.

2. Safety device for screws, according to claim 1, **characterized in that** said axial and perimetric retaining means consist of an outside perimetric projection (6) of the outermost wall of the inside body (1) , as well as an inside perimetric projection (7) of the side wall of the outside body (3), in such a way that after the coupling of these bodies (1, 3) by elastic connection it is impossible to separate these bodies.

3. Safety device for screws, according to claim 2, **characterized in that** said outermost wall of the inside body (1) and the side wall of the outer body (3) are provided with a slight tapering.

4. Safety device for screws, according to any one of the preceding claims, **characterized in that** the outside surface of the side wall of the outside body (3) has some notches or knurling that facilitates the handling thereof.

5. Safety device for screws, according to claim 1, **characterized in that** said grooves (5) of the outside body (3) are arranged in a number of four and with an angular equal separation therebetween.

6. Safety device for screws, according to claim 1, **characterized in that** said lockable tongues (4) of the inside body (1) are arranged in a number of four and with an angular equal separation therebetween.

7. Safety device for screws, according to claim 1, **characterized in that** said polygonal head is hexagonal.

8. Safety device for screws, according to claim 1, **characterized in that** said bottom of the outside body (3) includes peripherally to the grooves (5) some unscrewing projections (10), whereas the inside body (1) has some unscrewing recesses (11) arranged peripherally to the tongues (4) and corresponding to the receiving of the cited unscrewing projections (10).
